(19) Europäisches Patentamt
European Patent Office
Office européen des brevets

(11) **EP 4 306 499 A1**

(12) **EUROPEAN PATENT APPLICATION**

(43) Date of publication:
**17.01.2024 Bulletin 2024/03**

(21) Application number: **23185412.6**

(22) Date of filing: **13.07.2023**

(51) International Patent Classification (IPC):
**C04B 41/00** $^{(2006.01)}$   **C04B 41/52** $^{(2006.01)}$
**C04B 41/87** $^{(2006.01)}$   **C04B 41/89** $^{(2006.01)}$
**F01D 5/28** $^{(2006.01)}$   **C04B 41/50** $^{(2006.01)}$
**C04B 111/00** $^{(2006.01)}$

(52) Cooperative Patent Classification (CPC):
(C-Sets available)
**C04B 41/009; C04B 41/5089; C04B 41/52; C04B 41/87; C04B 41/89; F01D 5/288;**
C04B 2111/00982   (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.07.2022 US 202263389555 P**

(71) Applicant: **RTX Corporation
Farmington, CT 06032 (US)**

(72) Inventors:
• **JACKSON, Richard Wesley III
Mystic (US)**
• **TANG, Xia
West Hartford (US)**
• **BEALS, James T.
West Hartford (US)**

(74) Representative: **Dehns
St. Bride's House
10 Salisbury Square
London EC4Y 8JD (GB)**

(54) **PROTECTIVE COATING**

(57) A barrier layer for an article according to an exemplary embodiment of this disclosure, among other possible things includes a bond coat comprising a matrix, diffusive particles disposed in the matrix, and gettering particles disposed in the matrix. The composition of the gettering particles is a reaction product of the chemical reaction of Equation 1 defined by Equation 2:

$$\text{Equation 1:} \quad Si_wO_xC_yN_z + \xi O_2 = wSiO_2 + yCO + \frac{z}{2}N_2$$

$$\text{Equation 2:} \quad \xi = \frac{2w + y - x}{2}$$

A barrier layer is also disclosed.

(52) Cooperative Patent Classification (CPC): (Cont.)

C-Sets
**C04B 41/009, C04B 35/565;**
**C04B 41/009, C04B 35/80;**
**C04B 41/5089, C04B 41/5024, C04B 41/5059;**
**C04B 41/5089, C04B 41/5024, C04B 41/5066;**
**C04B 41/5089, C04B 41/5024, C04B 41/5067;**
**C04B 41/52, C04B 41/5024, C04B 41/522;**
**C04B 41/52, C04B 41/5044;**
**C04B 41/52, C04B 41/5045, C04B 41/522;**
**C04B 41/52, C04B 41/5089, C04B 41/5059, C04B 41/5024, C04B 41/4539;**
**C04B 41/52, C04B 41/5089, C04B 41/5066, C04B 41/5024, C04B 41/4539, C04B 41/522;**
**C04B 41/52, C04B 41/5089, C04B 41/5067, C04B 41/5024, C04B 41/4539, C04B 41/522**

**Description**

**BACKGROUND**

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

This disclosure relates to composite articles, such as those used in gas turbine engines, and methods of coating such articles. Components, such as gas turbine engine components, may be subjected to high temperatures, corrosive and oxidative conditions, and elevated stress levels. In order to improve the thermal and/or oxidative stability, the component may include a protective barrier coating.

**SUMMARY**

A barrier layer for an article (e.g. for an article as herein described) according to an exemplary embodiment of this disclosure, among other possible things includes (or is) a bond coat comprising a matrix, diffusive particles disposed in the matrix, and gettering particles disposed in the matrix. The composition of the gettering particles is a reaction product of the chemical reaction of Equation 1 defined by Equation 2:

$$\text{Equation 1:} \quad Si_w O_x C_y N_z + \xi O_2 = wSiO_2 + yCO + \frac{z}{2}N_2$$

$$\text{Equation 2:} \quad \xi = \frac{2w + y - x}{2}$$

In a further example of the foregoing, z is zero and at least two of w, x, and y are greater than zero.

In a further example of any of the foregoing, each of w, x, and y are greater than zero.

In a further example of any of the foregoing, x is zero and at least two of w, y, and z are greater than zero.

In a further example of any of the foregoing, each of w, y, and z are greater than zero.

In a further example of any of the foregoing, y is zero and at least two of w, x, and z are greater than zero.

In a further example of any of the foregoing, each of w, x, and z are greater than zero.

In a further example of any of the foregoing, w is greater than zero and at least two of x, y, and z are greater than zero.

In a further example of any of the foregoing, $\Omega = \xi/(y + z/2)$ and $\Omega$ is greater than or equal to 1.

In a further example of any of the foregoing, the ratio of silicon to carbon (Si:C) is greater than 0.75.

In a further example of any of the foregoing, the ratio of silicon to nitrogen (Si:N) is greater than 0.75.

In a further example of any of the foregoing, the ratio of silicon to oxygen (Si:O) is greater than 1.

In a further example of any of the foregoing, the matrix is substantially pure silicon dioxide.

An article according to an exemplary embodiment of this disclosure, among other possible things includes a substrate, and a barrier layer (or bond coat, e.g. as herein described) disposed on the substrate. The barrier layer comprises a matrix of substantially pure silicon dioxide, diffusive particles disposed in the matrix, and gettering particles disposed in the matrix. The composition of the gettering particles is a reaction product of the chemical reaction of Equation 1 defined by Equation 2:

$$\text{Equation 1:} \quad Si_w O_x C_y N_z + \xi O_2 = wSiO_2 + yCO + \frac{z}{2}N_2$$

$$\text{Equation 2:} \qquad \xi = \frac{2w + y - x}{2}$$

In a further example of the foregoing, z is zero and at least two of w, x, and y are greater than zero.

In a further example of any of the foregoing, each of w, x, and y are greater than zero.

In a further example of any of the foregoing, x is zero and at least two of w, y, and z are greater than zero.

In a further example of any of the foregoing, each of w, y, and z are greater than zero.

In a further example of any of the foregoing, y is zero and at least two of w, x, and z are greater than zero.

In a further example of any of the foregoing, each of w, x, and z are greater than zero.

In a further example of any of the foregoing, w is greater than zero and at least two of x, y, and z are greater than zero.

In a further example of any of the foregoing, $\Omega = \xi/(y + z/2)$ and $\Omega$ is greater than or equal to 1.

In a further example of any of the foregoing, the ratio (e.g. the molar ratio) of silicon to carbon (Si:C) is greater than 0.75.

In a further example of any of the foregoing, the ratio (e.g. the molar ratio) of silicon to nitrogen (Si:N) is greater than 0.75.

In a further example of any of the foregoing, the ratio (e.g. the molar ratio) of silicon to oxygen (Si:O) is greater than 1.

In a further example of any of the foregoing, the substrate is a ceramic matrix composite substrate.

An article according to an exemplary embodiment of this disclosure, among other possible things includes a substrate, and a barrier layer as herein described disposed on the substrate.

## BRIEF DESCRIPTION OF THE DRAWINGS

Certain exemplary embodiments will now be described in greater detail by way of example only and with reference to the accompanying drawings in which:

Figure 1 is a schematic view of an example gas turbine engine.
Figure 2 illustrates an article for the gas turbine engine of claim 1 with a coating.

## DETAILED DESCRIPTION

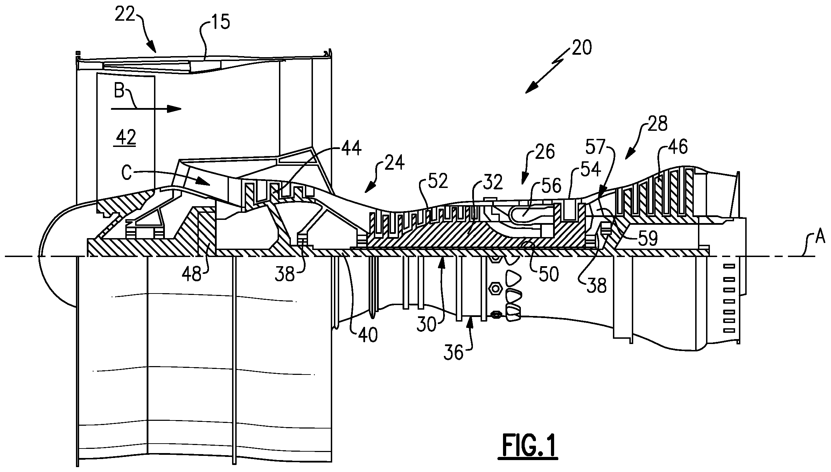

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of $[(Tram \, °R) / (518.7 \, °R)]^{0.5}$. The "Low corrected fan tip speed" as disclosed herein according to one non-limiting embodiment is less than about 1150.0 ft / second (350.5 meters/second), and can be greater than or equal to 1000.0 ft / second (304.8 meters/second).

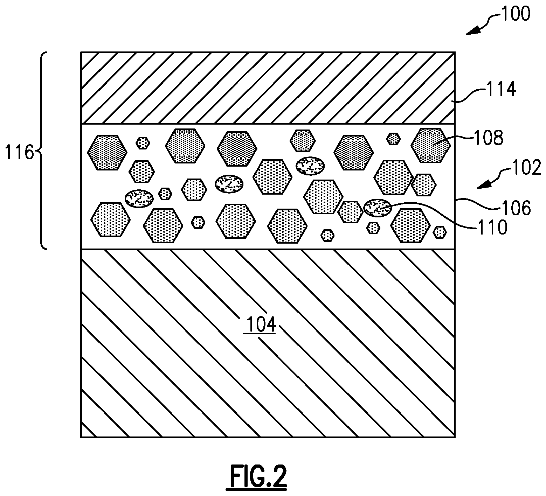

Figure 2 schematically illustrates a representative portion of an example article 100 for the gas turbine engine 20 that includes a composite material bond coat 102 that acts as a barrier layer. The article 100 can be, for example, an airfoil in the compressor section 24 or turbine section 28, a combustor liner panel in the combustor section 26, a blade outer air seal, or other component that would benefit from the examples herein. In this example, the bond coat 102 is used as an environmental barrier layer to protect an underlying substrate 104 from environmental conditions, as well as thermal conditions. As will be appreciated, the bond coat 102 can be used as a stand-alone barrier layer, as an outermost/top coat with additional underlying layers, or in combination with other coating under- or over-layers, such as, but not limited to, ceramic-based topcoats.

The bond coat 102 includes a matrix 106 and a dispersion of "gettering" particles 108 in the matrix 106. The bond coat 102 may also include a dispersion of diffusive particles 110 in the matrix 106. The matrix 106 is, or comprises, silicon dioxide ($SiO_2$)-based amorphous oxide material. In a particular example, the matrix 106 is substantially pure silicon dioxide, e.g., contains more than 95% silicon dioxide. The diffusive particles 110 could be, for instance, barium magnesium alumino-silicate (BMAS) particles, barium strontium aluminum silicate particles, magnesium silicate particles, calcium aluminosilicate particles (CAS), alkaline earth aluminum silicate particles, yttrium aluminum silicate particles, ytterbium aluminum silicate particles, other rare earth metal aluminum silicate particles, or combinations thereof.

During use of the article 100, such as in the engine 20, the article 100 may be exposed to high temperatures. The high temperatures may induce changes in the composition of the bond coat 102 over time. For instance, the diffusive particles 110 may become enriched in silicon from the silicon dioxide matrix 106. Eventually, a chemical equilibrium may be reached, after which the bond coat 102 composition does not substantially change.

The bond coat 102 protects the underlying substrate 104 from oxygen and moisture. For example, the substrate 104 can be a ceramic-based substrate, such as a silicon-containing ceramic material. One example is silicon carbide. Another non-limiting example is silicon nitride. Ceramic matrix composite (CMC) substrates 104 such as silicon carbide fibers in a silicon carbide matrix are also contemplated. These CMC substrates can be formed by melt infiltration, chemical vapor infiltration (CVI), polymer infiltration and pyrolysis (PIP), particulate infiltration, or any other known method. The substrate 104 can also be a metallic substrate, in other examples.

The gettering particles 108 and the optional diffusive particles 110 function as an oxygen and moisture diffusion barrier to limit the exposure of the underlying substrate 104 to oxygen and/or moisture from the surrounding environment. The gettering particles 108 can react with oxidant species, such as oxygen or water that could diffuse into the bond coat 102. In this way, the gettering particles 108 could reduce the likelihood of those oxidant species reaching and oxidizing the substrate 104. Without being bound by any particular theory, the diffusive particles 110, such as BMAS particles 110, enhance oxidation and moisture protection by diffusing to the outer surface of the barrier layer opposite of the substrate 104 and forming a sealing layer that seals the underlying substrate 104 from oxygen/moisture exposure. Additionally, cationic metal species of the diffusive particles 110 (for instance, for BMAS particles, barium, magnesium, and aluminum) can diffuse into the gettering particles 108 to enhance oxidation stability of the gettering material. Further, the diffusion behavior of the diffusive particles 110 may operate to seal any microcracks that could form in the barrier layer. Sealing the micro-cracks could prevent oxygen from infiltrating the barrier layer, which further enhances the oxidation resistance of the barrier layer.

The bond coat 102 can be applied by any known method, such as a slurry coating method or spray method which are generally known in the art.

In some examples, a ceramic-based top coat 114 is interfaced directly with the bond coat 102. As an example, the ceramic-based top coat 114 can include one or more layers of an oxide-based material. The oxide-based material can be, for instance, hafnium-based oxides or yttrium-based oxides (such as hafnia, hafnium silicate, yttrium silicates, yttria stabilized zirconia or gadolinia stabilized zirconia), calcium aluminosilicates, mullite, barium strontium aluminosilicate, or combinations thereof, but is not limited to such oxides.

The top coat 114 and bond coat 102 together form a barrier coating 116 for the substrate 104. The top coat 114 is the outermost layer of the barrier coating 116, and is exposed to the elements when the article 100 is in use.

In addition to the environmental protection provided to the underlying substrate 104 by the barrier coating 116, it may be advantageous for the barrier coating 116 to also provide thermal protection to the substrate 104. The substrate 104/article 100 may be exposed to very hot operating conditions in the engine 20. Providing thermal protection to the article 100 extends its useful lifespan and enables increased engine 20 thermal efficiency by allowing higher operating temperatures or less cooling air.

The gettering particles 108 make up the majority (e.g., more than about 50%) of the bond coat 102. Thus selecting gettering particles 108 which provide good thermal protection to the substrate 104 because of their low thermal conductivity can improve the overall thermal protection provided by the barrier coating 116 to the substrate 104. In one example, the gettering particles 108 have a thermal conductivity less than about 10 W/mK. In a further example, the gettering particles 108 have a thermal conductivity less than about 5W/mK.

Particles comprising silicon and carbon are good candidates for gettering particles 108 because of their mechanical properties and reactivity with oxidants. However, silicon and carbon-containing materials do not necessarily have good thermal properties (e.g., relatively low thermal conductivity). For instance, crystalline silicon carbide has desirable properties for oxidation resistance but has high thermal conductivity. The high thermal conductivity is related to the high strength of the chemical bonds in crystalline silicon carbide. Amorphous silicon carbide has relatively weaker chemical bonds and therefore lower thermal conductivity.

Silicon and carbide-containing materials tend to crystallize over time when exposed to very high temperatures such as some of the operating temperatures of the engine 20, which can also increase the thermal conductivity of the material. However, the addition of oxygen and/or nitrogen to silicon and carbon-containing materials tends to impede crystallization, even at very high temperatures.

To that end, the gettering particles 108 are silicon and carbon-containing materials with the chemical formula $Si_wO_xC_yN_z$. where each of w, x, y, and z are greater than or equal to zero. In a particular example, w is greater than zero and each of x, y, and z are greater than or equal to zero. In a further example, w is greater than zero and at least two of x, y, and z or each of x, y, and z are greater than zero. The particular composition of the gettering particles 108 is selected so that the gettering particles 108 exhibit good reactivity with oxidants, do not oxidize to undesired reaction products such as high volumes of gases which may build up in the barrier coating 116, and have a slow rate of crystallization.

In particular, it has been discovered that gettering particles 108 selected according to the reaction product of the reaction shown in Equation 1 as defined by Equation 2 balance the desired properties and exhibit excellent thermal and environmental properties.

**Equation 1:** $$Si_wO_xC_yN_z + \xi O_2 = wSiO_2 + yCO + \frac{z}{2}N_2$$

$$\textbf{Equation 2:} \qquad \xi = \frac{2w + y - x}{2}$$

$\xi$ represents the ratio of the moles of oxygen as a reactant in the reaction of Equation 1. The ratio of $\xi$ to the moles of carbon monoxide (y) plus the moles of nitrogen (z/2) as reaction products in the reaction of Equation 1 is represented by $\Omega = \xi/(y + z/2)$. In a specific example, $\Omega \geq 1$.

In a further example, the ratio of silicon to carbon (Si:C) > 0.75, the ratio of silicon to nitrogen (Si:N) > 0.75, and the ratio of silicon to oxygen (Si:O) > 1.

In a particular application of Equations 1 and 2 where z = 0 (e.g., the starting compound $Si_wO_xC_yN_z$ does not contain nitrogen), w = 0.5, x = 0, y = 0.5, which yields the following reaction corresponding to silicon oxycarbide (SiOC):

$$Si_{0.5}O_{0.0}C_{0.5} + \frac{3}{4}O_2 = \frac{1}{2}SiO_2 + \frac{1}{2}CO$$

In another example where z = 0 similar to the example discussed above, w = 0.33, x = 0.33, and y = 0.5, which yields silicon carbide (SiC):

$$Si_{0.33}O_{0.33}C_{0.33} + \frac{1}{3}O_2 = \frac{1}{3}SiO_2 + \frac{1}{3}CO$$

In another particular application of Equations 1 and 2 where y = 0 (e.g., the starting compound $Si_wO_xC_yN_z$ does not contain carbon), w = 3/7, x = 0, and z = 4/7, which yields silicon nitride ($Si_3N_4$):

$$Si_{3/7}O_{0.}N_{4/7} + \frac{3}{7}O_2 = \frac{3}{7}SiO_2 + \frac{2}{7}N_2$$

In another particular application of Equations 1 and 2 where y=0 similar to the example discussed above, w = 0.33, x = 0.33, and z = 0.33, which yields silicon oxynitride (SiON):

$$Si_{0.33}O_{0.33}N_{0.33} + \frac{1}{6}O_2 = \frac{1}{3}SiO_2 + \frac{1}{6}N_2$$

In another particular application of Equations 1 and 2 where x = 0 (e.g., the starting compound $Si_wO_xC_yN_z$ does not contain oxygen), w = 0.5, y = 0.5, and z = 0, which yields silicon carbide (SiC) as shown below. Notably, this is the same result the example discussed above where z=0, w = 0.33, x = 0.33, and y = 0.5.

$$Si_{0.5}N_{0.0}C_{0.5} + \frac{3}{4}O_2 = \frac{1}{2}SiO_2 + 0N_2 + 1CO$$

In another particular application of Equations 1 and 2 where x = 0 similar to the examples discussed above, w = 3/7, y = 3/7, and z = 0, which yields silicon nitride ($Si_3N_4$) as shown below. Notably, this is the same result as discussed above where y = 0, w = 3/7, x = 0, and z = 4/7.

$$Si_{3/7}N_{4/7}C_0 + \frac{3}{7}O_2 = \frac{3}{7}SiO_2 + \frac{2}{7}N_2 + 0CO$$

In another particular application of Equations 1 and 2 where x = 0 similar to the examples discussed above, w = 3/7, y = 3/7, and z = 0, which yields silicon carbide and silicon nitride (½ $Si_{0.5}C_{0.5}$ and ½ $Si_{3/7}N_{4/7}$):

$$Si_{13/28}N_{8/28}C_{7/28} + \frac{33}{56}O_2 = \frac{13}{28}SiO_2 + \frac{4}{28}N_2 + \frac{7}{28}CO$$

Table 1 summarizes example values for w, x, y, and z for Equations 1 and 2 above.

Table 1

| Si | O | C | N | O2 | SiO$_2$ | CO | N$_2$ |
|------|-------|-------|-------|-------|-------|-------|-------|
| w | x | y | z | ξ | Moles | Moles | Moles |
| 0.5 | 0 | 0.5 | 0 | 0.75 | 0.5 | 0.5 | 0 |
| 0.429 | 0.000 | 0 | 0.571 | 0.429 | 0.429 | 0 | 0.286 |
| 0.333 | 0.333 | 0.333 | 0.000 | 0.5 | 0.333 | 0.333 | 0 |
| 0.464 | 0.000 | 0.25 | 0.286 | 0.589 | 0.464 | 0.25 | 0.143 |
| 0.452 | 0.133 | 0.3 | 0.114 | 0.602 | 0.452 | 0.3 | 0.057 |
| 0.438 | 0.133 | 0.2 | 0.229 | 0.538 | 0.438 | 0.2 | 0.114 |
| 0.424 | 0.133 | 0.1 | 0.343 | 0.474 | 0.424 | 0.1 | 0.171 |
| 0.386 | 0.000 | 0.5 | 0.114 | 0.636 | 0.386 | 0.5 | 0.057 |
| 0.371 | 0.000 | 0.4 | 0.229 | 0.571 | 0.371 | 0.4 | 0.114 |
| 0.357 | 0.000 | 0.3 | 0.343 | 0.507 | 0.357 | 0.3 | 0.171 |

As used herein, the term "about" has the typical meaning in the art, however in a particular example "about" can mean deviations of up to 10% of the values described herein.

Although the different examples are illustrated as having specific components, the examples of this disclosure are not limited to those particular combinations. It is possible to use some of the components or features from any of the embodiments in combination with features or components from any of the other embodiments.

Certain embodiments of the present disclosure are as follows:

1. A barrier layer for an article, comprising:

a bond coat comprising a matrix, diffusive particles disposed in the matrix, and gettering particles disposed in the matrix, wherein the composition of the gettering particles is a reaction product of the chemical reaction of Equation 1 defined by Equation 2:

$$\text{Equation 1:} \quad Si_w O_x C_y N_z + \xi O_2 = wSiO_2 + yCO + \frac{z}{2}N_2$$

$$\text{Equation 2:} \quad \xi = \frac{2w + y - x}{2}$$

2. The barrier layer of embodiment 1, wherein z is zero and at least two of w, x, and y are greater than zero.

3. The barrier layer of embodiment 2, wherein each of w, x, and y are greater than zero.

4. The barrier layer of embodiment 1, wherein x is zero and at least two of w, y, and z are greater than zero.

5. The barrier layer of embodiment 4, wherein each of w, y, and z are greater than zero.

6. The barrier layer of embodiment 1, wherein y is zero and at least two of w, x, and z are greater than zero.

7. The barrier layer of embodiment 6, wherein each of w, x, and z are greater than zero.

8. The barrier layer of embodiment 1, wherein w is greater than zero and at least two of x, y, and z are greater than zero.

9. The barrier layer of embodiment 1, wherein Ω = ξ/(y + z/2) and Ω is greater than or equal to 1.

10. The barrier layer of embodiment 9, wherein the ratio of silicon to carbon (Si:C) is greater than 0.75.

11. The barrier layer of embodiment 10, wherein the ratio of silicon to nitrogen (Si:N) is greater than 0.75.

12. The barrier layer of embodiment 11, wherein the ratio of silicon to oxygen (Si:O) is greater than 1.

13. The barrier layer of embodiment 1, wherein the matrix is substantially pure silicon dioxide.

14. An article comprising:

a substrate; and
a barrier layer disposed on the substrate, the barrier layer comprising:

a matrix of substantially pure silicon dioxide,
diffusive particles disposed in the matrix, and
gettering particles disposed in the matrix, wherein the composition of the gettering particles is a reaction product of the chemical reaction of Equation 1 defined by Equation 2:

$$\text{Equation 1:} \qquad Si_wO_xC_yN_z + \xi O_2 = wSiO_2 + yCO + \frac{z}{2}N_2$$

$$\text{Equation 2:} \qquad \xi = \frac{2w + y - x}{2}$$

15. The article of embodiment 14, wherein w is greater than zero and at least two of x, y, and z are greater than zero.

16. The article of embodiment 14, wherein $\Omega = \xi/(y + z/2)$ and $\Omega$ is greater than or equal to 1.

17. The article of embodiment 16, wherein the ratio of silicon to carbon (Si:C) is greater than 0.75.

18. The article of embodiment 17, wherein the ratio of silicon to nitrogen (Si:N) is greater than 0.75.

19. The article of embodiment 18, wherein the ratio of silicon to oxygen (Si:O) is greater than 1.

20. The article of embodiment 1, wherein the substrate is a ceramic matrix composite substrate.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

**Claims**

1. A barrier layer for an article, comprising:
a bond coat comprising a matrix, diffusive particles disposed in the matrix, and gettering particles disposed in the matrix, wherein the composition of the gettering particles is a reaction product of the chemical reaction of Equation 1 defined by Equation 2:

$$\text{Equation 1:} \qquad Si_wO_xC_yN_z + \xi O_2 = wSiO_2 + yCO + \frac{z}{2}N_2$$

$$\text{Equation 2:} \qquad \xi = \frac{2w + y - x}{2}$$

2. The barrier layer of claim 1, wherein the matrix is substantially pure silicon dioxide.

3. An article comprising:

a substrate; and
a barrier layer disposed on the substrate, the barrier layer comprising:

a matrix of substantially pure silicon dioxide,
diffusive particles disposed in the matrix, and
gettering particles disposed in the matrix, wherein the composition of the gettering particles is a reaction product of the chemical reaction of Equation 1 defined by Equation 2:

$$\text{Equation 1:} \qquad Si_w O_x C_y N_z + \xi O_2 = w SiO_2 + y CO + \frac{z}{2} N_2$$

$$\text{Equation 2:} \qquad \xi = \frac{2w + y - x}{2}$$

4. The article of claim 3, wherein the substrate is a ceramic matrix composite substrate.

5. The barrier layer or article of any preceding claim, wherein $z$ is zero and at least two of $w$, $x$, and $y$ are greater than zero.

6. The barrier layer or article of any preceding claim, wherein each of $w$, $x$, and $y$ are greater than zero.

7. The barrier layer or article of any one of claims 1 to 5, wherein $x$ is zero and at least two of $w$, $y$, and $z$ are greater than zero.

8. The barrier layer or article of claim 7, wherein each of $w$, $y$, and $z$ are greater than zero.

9. The barrier layer or article of any one of claims 1 to 5, wherein $y$ is zero and at least two of $w$, $x$, and $z$ are greater than zero.

10. The barrier layer or article of claim 9, wherein each of $w$, $x$, and $z$ are greater than zero.

11. The barrier layer or article of any preceding claim, wherein $w$ is greater than zero and at least two of $x$, $y$, and $z$ are greater than zero.

12. The barrier layer or article of any preceding claim, wherein $\Omega = \xi/(y + z/2)$ and $\Omega$ is greater than or equal to 1.

13. The barrier layer or article of any preceding claim, wherein the ratio of silicon to carbon (Si:C) is greater than 0.75.

14. The barrier layer or article of any preceding claim, wherein the ratio of silicon to nitrogen (Si:N) is greater than 0.75.

15. The barrier layer or article of any preceding claim, wherein the ratio of silicon to oxygen (Si:O) is greater than 1.

FIG.1

**FIG.2**

Europäisches
Patentamt

European
Patent Office

Office européen
des brevets

# EUROPEAN SEARCH REPORT

**Application Number**

EP 23 18 5412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 862 338 A1 (RAYTHEON TECH CORP [US]) 11 August 2021 (2021-08-11) * paragraphs [0030] – [0035], [0045] – [0047]; claims 1,3,6; figure 2 * ----- | 1-15 | INV. C04B41/00 C04B41/52 C04B41/87 C04B41/89 F01D5/28 C04B41/50 <br><br> ADD. C04B111/00 |

**TECHNICAL FIELDS SEARCHED (IPC)**

C04B
F01D

The present search report has been drawn up for all claims

| Place of search | Date of completion of the search | Examiner |
|---|---|---|
| Munich | 21 November 2023 | Bonneau, Sébastien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

# EP 4 306 499 A1

## ANNEX TO THE EUROPEAN SEARCH REPORT
## ON EUROPEAN PATENT APPLICATION NO.

EP 23 18 5412

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2023

| Patent document cited in search report | | Publication date | Patent family member(s) | | Publication date |
|---|---|---|---|---|---|
| EP 3862338 | A1 | 11-08-2021 | EP 3862338 | A1 | 11-08-2021 |
| | | | US 2021246080 | A1 | 12-08-2021 |
| | | | US 2023127128 | A1 | 27-04-2023 |

EPO FORM P0459

For more details about this annex : see Official Journal of the European Patent Office, No. 12/82